# EUROPÄISCHE PATENTSCHRIFT

(11) **EP 0 885 102 B1**
(45) Veröffentlichungstag und Bekanntmachung des Hinweises auf die Patenterteilung: **29.08.2001**
(21) Anmeldenummer: 97907058.8
(22) Anmeldetag: 28.02.1997
(51) Int. Cl.: B29B 7/76

(54) **Mischkopf**
MIXING HEAD
TETE DE MELANGE

(30) Priorität: 04.03.1996 DE 19608187
(43) Veröffentlichungstag der Anmeldung: 23.12.1998
(73) Patentinhaber: POLYPLAN GmbH Polyurethan-Maschinen, 82064 Strasslach (DE)
(72) Erfinder: NAGEL, Horst, D-56479 Rehe (DE)
(74) Vertreter: Köster, Hajo, Dr.
(86) Internationale Anmeldenummer: EP9701012
(87) Internationale Veröffentlichungsnummer: WO9732705

(56) Entgegenhaltungen:
- EP-A- 0 162 130
- WO-A-88/03052
- DE-A- 3 427 327
- DE-B- 2 645 937
- DE-C- 3 828 061
- US-A- 4 510 120

## Beschreibung

Die Erfindung betrifft ein Verfahren zur Gegenstrominjektionsvermischung von Fluiden, bei dem mindestens zwei Fluidgemische getrennt voneinander erhalten werden, indem mindestens zwei mal jeweils mindestens zwei Fluide unter Druck in einer Vormischkammer gegeneinander injiziert und dadurch zu den Fluidgemischen vorvermischt werden.

Häufig werden bei viskosen und aggressiven Mehrkomponenten-Systemen, die durch Vermischen von zwei oder mehr flüssigen Komponenten hergestellt werden, die einzelnen Komponenten erst kurz vor der Verarbeitung derartiger Mehrkomponenten-Systeme gegeneinander injiziert und dadurch vermischt, indem beispielsweise die einzelnen Komponenten unter hohen Drucken durch gegenüberliegende Mischdüsen in einer Mischkammer gegeneinander injiziert, dadurch vermischt und als Reaktionsgemisch ausgetragen werden. Eine derartige Vermischung bzw. Gegenstrominjektionsvermischung führt man beispielsweise bei Zweikomponenten-Reaktionsharzsystemen, wie Polyurethan-Schaumsystemen und nichtzelligen Polyurethansystemen, durch. Bei dem dabei erhaltenen Reaktionsgemisch kann es sich um ein schäumendes und auch ein nichtschäumendes handeln. Derartige reaktive Systeme bzw. Fluide werden beispielsweise mit Polyurethananlagen und -maschinen verarbeitet.

Wenn im Rahmen der vorliegenden Unterlagen von einem Fluid bzw. von einer flüssigen Komponente die Rede ist, dann kann es sich um ein Fluid aus einer einzelnen Substanz bzw. um eine einzelne Komponente oder auch um ein Gemisch von derartigen Substanzen handeln. Bei einem derartigen Fluid kann es sich um jegliche hydraulische Flüssigkeit handeln. Auch wenn die Erfindung nachstehend anhand von Polyurethananlagen und -maschinen erläutert wird, kann der erfindungsgemäß einsetzbare Mischkopf gleichwohl bei allen Maschinen eingesetzt werden, bei denen Fluide und flüssige Komponenten der beschriebenen Art zum Einsatz kommen. Diese Fluide können flüssig bis pastös sein und aus beliebigen Komponenten bestehen sowie auch feste Komponenten in gelöster Form enthalten.

Aus der DE 34 27 327 C2 ist ein Mischkopf zum Erzeugen eines vorzugsweise chemisch reaktionsfähigen Gemisches aus mindestens zwei Kunststoffkomponenten mit einer Mischkammer, die Eintrittsöffnungen für die einzelnen Kunststoffkomponenten und eine Austrittsöffnung für das Kunststoffkomponentengemisch besitzt, bekannt. Allerdings besitzt dieser bekannte Mischkopf nur eine einzige Mischkammer.

In der DE-B-2645937 ist ein Injektionsmischkopf für insbesondere Polyurethan beschrieben, der zwei Mischvorrichtungen besitzt. Die dort durch Injektion erhaltenen Gemische treten in einen Transferzylinder ein, in dem eine Beruhigung stattfindet. Dieses Dokument offenbart auch eine Gegenstrominjektionsvermischung gemäß dem einleitenden Teil der Ansprüche 1 und 2.

Aufgabe der vorliegenden Erfindung ist es, ein Verfahren zur Gegenstrominjektionsvermischung von Fluiden der genannten Art bereitzustellen gemäß den Ansprüchen 1 und 2, mit dem eine bessere Vermischung ermöglicht wird. Bevorzugte Ausführungen dieses Verfahrens werden in den Unteransprüchen 3 bis 6 definiert.

Diese Aufgabe wird dadurch gelöst, daß die Fluide beim Vorvermischen derart gegeneinander injiziert werden, daß die dabei erhaltenen Fluidgemische aufgrund der ihnen nach dem Vorvermischen immer noch innewohnenden kinetischen Restenergie anschließend nochmals in einer Nachvermischungs-Mischkammer, in der die Vormischkammern münden, gegeneinander injiziert und dadurch nachvermischt werden.

Vorzugsweise wird bei diesem Verfahren erfindungsgemäß ein Mischkopf eingesetzt, der auch als Boxerkopf bezeichnet werden kann. Dieser erfindungsgemäß einsetzbare Mischkopf weist mindestens zwei Vormischkammern auf. Diese Vormischkamm.ern können ebenso gestaltet sein, wie die bereits bekannten Mischkammern der bekannten Mischköpfe. Bei den in diese Vormischkammern führenden Mischdüsen kann es sich dabei um einfache Bohrungen etc. handeln.

Bei den aus den Vormischkammern austretenden Fluidgemischen handelt es sich nicht um das zu verarbeitende bzw. endgültige Fluidgemisch. Vielmehr münden die Auslässe der Vormischkammern in einer weiteren Mischkammer, die im Rahmen der vorliegenden Unterlagen auch als Nachvermischungs-Mischkammer bezeichnet wird. Dabei ist lediglich erforderlich, daß die gewählte Geometrie und Anordnung der Auslässe eine Nachvermischung gewährleistet. Vorzugsweise sind die Auslässe in dieser Mischkammer gegenüberliegend angeordnet. Dadurch wird erreicht, daß die aus den Auslässen austretenden Fluidgemische gegeneinander injiziert und dadurch "quasi nochmals" vermischt werden.

Wenn im Rahmen der vorliegenden Unterlagen davon die Rede ist, daß die zu vermischenden Fluide bzw. Fluidgemische gegeneinander injiziert werden, dann umfaßt dies alle Ausführungsformen, bei denen die zu vermischenden Fluidströme aufeinandertreffen und vermischt werden. Vorzugsweise werden die Fluidströme natürlich direkt aufeinander und insbesondere frontal gegeneinander gelenkt. Sind somit beispielsweise nur zwei Fluidströme vorhanden, dann beträgt der Winkel zwischen diesen beiden (und natürlich auch der Winkel zwischen den Achsen der Auslässe und Mischdüsen) 180°. Allerdings kann dieser Winkel und/oder der vertikale Abstand der Auslässe zueinander frei gewählt werden.

Auch ist es möglich, mehr als zwei Fluidströme in einer Vormischkammer und/oder einer Mischkammer miteinander zu vermischen. So können beispielsweise in einer Mischkammer drei oder mehr Fluidströme aufeinandertreffen. Bei drei Fluidströmen beträgt der Winkel zwischen den Fluidströmen zweckmäßigerweise 120°, wobei natürlich auch andere Winkel gewählt werden können. Analoges gilt, wenn noch mehr Fluidströme aufeinandertreffen. Natürlich müssen dann die Vormischkammern mit einer entsprechenden Anzahl von Mischdüsen versehen sein. Entsprechendes gilt auch für die Nachvermischungs-Mischkammer.

In der Regel ist im übrigen die Nachvermischungs-Mischkammer größer dimensioniert als die Vormischkammern.

Nach einer bevorzugten Ausführungsform sind die einzelnen Vormischkammern in ihren Dimensionen so ausgelegt, daß nach der ersten Gegenstrominjektion in der Vormischkammer noch eine kinetische Restenergie des in den Vormischkammern erhaltenen Fluidgemische bzw. Reaktionsgemische verbleibt. Diese Energie wird dann genutzt, um beide Gemische noch einmal in der Nachvermischungs-Mischkammer gegeneinander zu injizieren und dadurch eine Nachvermischung zu bewirken, mit der eine erheblich verbesserte Endvermischung erreicht wird. Natürlich muß der Mischkopf dazu auch entsprechend betrieben werden; mit anderen Worten, die Menge der zu vermischenden Fluide und der Druck, mit dem diese Fluide beaufschlagt werden, muß entsprechend gewählt werden. Auch sollte die Einspritzung in die verschiedenen Vormischkammern vorzugsweise gleichzeitig erfolgen.

Nach einer bevorzugten Ausführungsform sind die Vormischkammern und die Nachvermischungs-Mischkammer röhrenförmig ausgebildet. Eine derartige Röhrenform kann im Prinzip beliebigen Querschnitt, beispielsweise mehreckigen Querschnitt, besitzen. Vorzugsweise besitzen alle Mischkammern jedoch einen kreisförmigen Querschnitt und stellen Hohlzylinder dar bzw. sind holzylindrisch ausgestaltet. Zweckmäßigerweise bleibt die Querschnittsform und -größe entlang der Längsachse der Mischkammern gleich.

Stellt die Vormischkammer einen derartigen Hohlzylinder dar, dann münden die Mischdüsen zweckmäßigerweise senkrecht zur Längsachse dieses Hohlzylinders in diese Mischkammer. Bei einer derartigen Mischdüse kann es sich im einfachsten Fall um eine simple Bohrung in der Wandung des Hohlzylinders handeln.

Ist die Mischkammer, in der die Nachvermischung erfolgt, ebenfalls hohlzylindrisch ausgestaltet, dann münden die Auslässe der Vormischkammern ebenfalls vorzugsweise senkrecht zur Längsachse der Nachvermischungs-Mischkammer. Auch in diesem Fall kann es sich um eine einfache Bohrung in der Wandung des Hohlzylinders handeln.

Sowohl bei den Vormischkammern als auch bei der Mischkammer, in der die Nachvermischung erfolgt, handelt es sich zweckmäßigerweise um eine hohlzylindrische Buchse, die an einem Ende verschlossen ist und die in eine entsprechende Bohrung in einem Mischkopf eingesetzt sind.

Die beiden Buchsen der Vormischkammer sind dabei vorzugsweise senkrecht zur Längsachse der Buchse der Nachvermischungs-Mischkammer ausgerichtet und münden an ihrem offenen Ende in diese Mischkammer bzw. sind in eine Bohrung in der Wandung der Buchse dieser Mischkammer eingesetzt. Auch letztere ist an einem Ende verschlossen und hat ihren Auslaß am anderen Ende.

Nach einer weiterhin bevorzugten Ausführungsform sind die röhrenförmig bzw. holzylindrisch ausgestalteten Vormischkammern und/oder die Mischkammer, in der die Nachvermischung erfolgt, mit einem Stempel ausgerüstet, der eine der Innenquerschnittsfläche der jeweiligen Mischkammern entsprechende Querschnittsfläche bzw. Querschnitt besitzt und insbesondere zylinderstabförmig ist. Dieser Stempel bzw. diese Stempel verschliessen die Mischkammern bzw. Buchsen auf einer Seite, ragen heraus und können in den verschiedenen Mischkammern durch eine geeignete außen angebrachte Vorrichtung hin- und herbewegt werden. Sie dienen zur Reinigung des Innenraumes der Mischkammern, zum Ausstoß von in den Mischkammern verbliebenen Rückständen und zum Zwangsverschluß der Mischdüsen-Eintrittsbohrungen in die Mischkammern. Dieser Reinigungsstempel bzw. Ausstoßstempel der Nachvermischungs-Mischkammer kann im Ruhezustand des Mischkopfes in jeder Position angehalten werden. Er kann sich beispielsweise über die Auslässe der Vormischkammern erstrecken und somit diese Auslässe verschließen. Er kann ferner im Ruhezustand soweit wie möglich aus der Nachvermischungs-Mischkammer herausgezogen sein. In dieser Position ist die mögliche Klebefläche zwischen Stempel und Mischkammer relativ gering. Gleiches gilt für die Ausstoß- bzw. Reingungsstempel der Vormischkammern.

Bei der Einrichtung zum Hin- und Herbewegen der verschiedenen Stempel kann es sich um beliebige, per se bekannte elektrische, mechanische, hydraulische oder pneumatische Vorrichtungen handeln.

Mit dem erfindungsgemäßeinsetzbaren Mischkopf ist es beispielsweise bei Polyurethansystemen möglich, die Eigenschaften der Gemische hinsichtlich des Endproduktes gezielt dadurch zu beeinflussen, daß die verschiedenen Fluide bzw. Fluidgemische mit unterschiedlichen Eigenschaften hinsichtlich Farbe, Raumgewicht, Reaktionsseiten, mechanischen Eigenschaften oder Endhärten gegeneinander - auch aus unterschiedlichen Vorvermischungen - nachvermischt werden.

Der erfindungsgemäßeinsetzbare Mischkopf und auch das erfindungsgemäße Verfahren werden anhand der folgenden, nicht maßstabsgetreuen und skizzenhaften Figur, die einen Längsschnitt durch einen erfindungsgemäß einsetzbaren Mischkopf zeigt, näher erläutert.

In dem erfindungsgemäß einsetzbaren Mischkopf 1, der einen zylindrischen oder quaderförmigen Block darstellen kann, sind zwei Vormischkammern 2, 3 und eine Mischkammer 10, in der die Nachvermischung erfolgt, ausgebildet. Diese Vormischkammern 2, 3 und die Nachvermischungs-Mischkammer 10 werden jeweils im wesentlichen durch eine hohlzylindrische Buchse 15, 16, 17 gebildet, die in Bohrungen im Mischkopf 1 eingesetzt sind. Dabei sind die Buchsen 15 und 16 der Vormischkammern 2, 3 senkrecht zur Längsachse 14 der Buchse 17 bzw. der Nachvermischungs-Mischkammer 10 angeordnet und münden an einem Ende in letztere. Dort befinden sich somit die Auslässe 8, 9 der Vormischkammern 2, 3.

In beide Vormischkammern 2, 3 münden jeweils zwei Zuleitungen 18, 19 bzw. 20, 21, die wiederum senkrecht zur Längsachse der Buchsen 15, 16 angeordnet sind und sich durch die Wandung davon in den Innenraum dieser Buchsen 15, 16 und somit in die Vormischkammern 2, 3 erstrecken.

Die Vormischkammern 2, 3 und die Zuleitungen 18, 19 bzw. 20, 21 sind derart angebracht, daß ihre Längsachsen auf einer gemeinsamen Achse liegen.

Bei Betrieb des erfindungsgemäßeingesetzten Mischkopfes werden die zu vermischenden Fluide einerseits durch die Zuleitungen 18, 19 und andererseits durch die Zuleitungen 20, 21 unter Druckbeaufschlagung in die Vormischkammern 2, 3 gepreßt und prallen dort frontal aufeinander bzw. werden gegeneinander injiziert und dadurch vermischt.

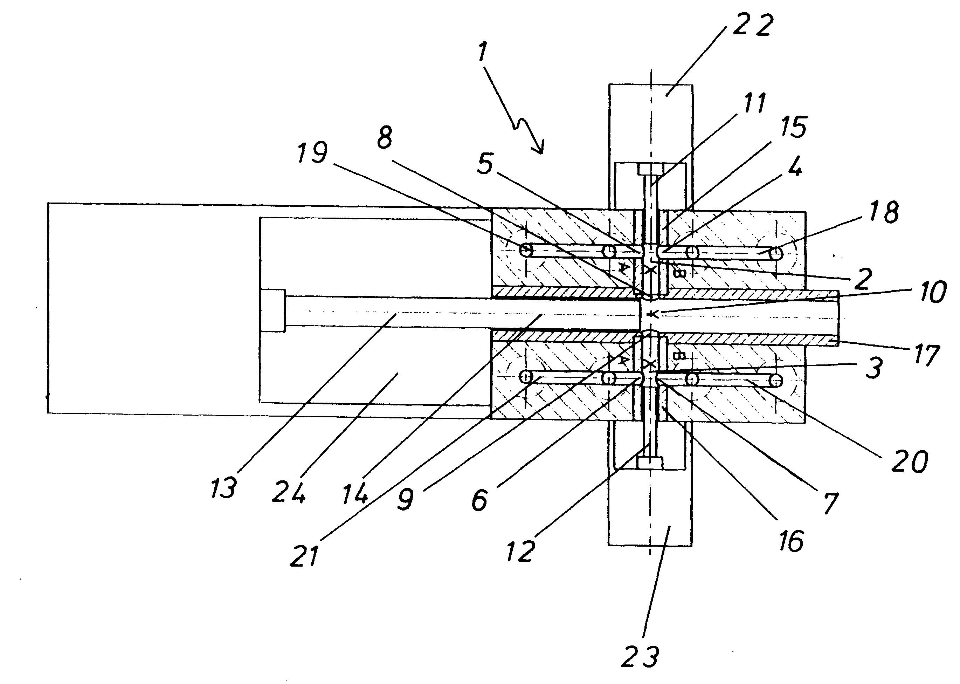

Aufgrund der den dabei erhaltenen Fluidgemischen noch immanenten kinetischen Restenergie werden diese Fluidgemische aus den Vormischkammern 2, 3 in die Mischkammer 10 geleitet, wo sie frontal aufeinanderstoßen und dadurch gegeneinander injiziert werden, so daß eine Nachvermischung stattfindet. Das Endfluidgemisch tritt dann aus der Nachvermischungs-Mischkammer 10 als fertiges Reaktionsgemisch aus (in der Figur rechts).

Damit die Fluide in der oben beschriebenen Weise durch den Mischkopf 1 strömen und gegeneinander injiziert werden, müssen die verschiedenen Mischkammern 2, 3, 10 natürlich auf der anderen Seite bzw. am anderen Ende verschlossen sein. Dies gewährleisten in die Buchsen 15, 16 bzw. 17 eingesetzte, hin- und herbewegbare Stempel 11, 12 bzw. 13. Bei Betrieb des Mischkopfes 1 befinden sich diese Stempel 11, 12 bzw. 13 in einer soweit zurückgezogenen Position, daß die Mischdüsen 4, 5 bzw. 6, 7, die auch als Einlässe für die Vormischkammern 2, 3 dienen, frei sind. Gleiches gilt für die Auslässe 8, 9 in die Mischkammer 10, in der die Nachvermischung erfolgt.

Zum Reinigen der Buchsen 15, 16 bzw. 17 werden die Stempel 11, 12 bzw. 13 in Richtung der offenen Enden dieser Buchsen geschoben und stoßen dabei zurückgebliebene Partikel etc. aus. Damit diese Reinigungswirkung erzielt wird, sollten die Stempel 11, 12 bzw. 13 möglichst paßgenau in die Buchsen 15, 16 bzw. 17 eingesetzt sein.

Zum Bewegen der Stempel 11, 12 bzw. 13 dienen per se bekannte Vorrichtungen 22, 23 bzw. 24, die pneumatisch, elektrisch, hydraulisch oder auch mechanisch betrieben und gesteuert werden können.

## Patentansprüche

1. Verfahren zur Gegenstrominjektionsvermischung von Fluiden, bei dem mindestens zwei Fluidgemische getrennt voneinander erhalten werden, indem mindestens zwei Mal jeweils mindestens zwei Fluide unter Druck in einer Vormischkammer (2, 3) gegeneinander injiziert und dadurch zu den Fluidgemischen vorvermischt werden,
**dadurch gekennzeichnet,**
dass die Fluide beim Vorvermischen derart gegeneinander injiziert werden, dass die dabei erhaltenen Fluidgemische aufgrund der ihnen nach dem Vorvermischen immer noch innewohnenden kinetischen Restenergie anschließend nochmals in einer Nachvermischungs-Mischkammer (10), in der die Vormischkammern (2, 3) münden, gegeneinander injiziert und dadurch nachvermischt werden.

2. Verfahren zur Gegenstrominjektionsvermischung von Fluiden, bei dem ein Mischkopf (1) eingesetzt wird, der mit mindestens zwei Vormischkammern (2, 3), in die jeweils mindestens zwei gegeneinander gerichtete Mischdüsen (4, 5 bzw. 6, 7), durch die die Fluide in die Vormischkammern (2, 3) unter Druck injiziert werden, münden und die mit jeweils einem in einer Nachvermischungs-Mischkammer (10) mündenden Auslaß (8, 9) ausgestattet sind, und mit einer Austrittsöffnung für das Gemisch aus der Nachvermischungs-Mischkammer (10) versehen ist,
**dadurch gekennzeichnet,**
daß die Vormischkammern (2, 3) derart dimensioniert sind und der Mischkopf (1) derart betrieben wird, dass die nach der ersten Injektion in den Vormischkammern (2, 3) erhaltenen sowie durch die Auslässe (8,9) austretenden Fluidgemische über eine solche kinetische Restenergie verfügen, daß sie dadurch noch einmal in der Nachvermischungs-Mischkammer (10) gegeneinander injiziert werden.

3. Verfahren nach Anspruch 2,
**dadurch gekennzeichnet,**
daß sich die Auslässe (8, 9) der Vormischkammern (2, 3) gegenüberliegen und insbesondere in gleicher Achse gegenüberstehen.

4. Verfahren nach Anspruch 2 oder 3,
**dadurch gekennzeichnet,**
daß die Vormischkammern (2, 3) und/oder die Nachvermischungs-Mischkammer (10) röhrenförmig und insbesondere hohlzylindrisch ausgestaltet ist bzw. sind.

5. Verfahren nach Anspruch 4
**dadurch gekennzeichnet,**
daß die Vormischkammer(n) (2, 3) und/oder die Nachvermischungs-Mischkammer (10) mit einem darin hin- und herbewegbaren Stempel (11, 12, 13) ausgestattet ist bzw. sind.

6. Verfahren nach Anspruch 4 oder 5,
**dadurch gekennzeichnet,**
daß die Auslässe (8, 9) der Vormischkammern (2, 3) derart angeordnet sind, daß die Fluidgemische in einem beliebigen Winkel und insbesondere senkrecht zur Längsachse (14) der Nachvermischungs-Mischkammer (10) in letztere eintreten.

## Claims

1. Method for counter-current injection mixing of fluids, wherein at least two fluid mixtures are obtained separately from each other by injecting in each case under pressure at least two fluids twice towards each other in a premixing chamber (2, 3), and are thereby premixed to fluid mixtures,
**characterized in that**
the fluids are injected towards each other during premixing in such a way that the thereby obtained fluid mixtures, due to the kinetic energy thereof still present after premixing, are subsequently injected once again against each other in a remixing chamber (10) into which the premixing chambers (2, 3) open, and are thereby remixed.

2. Method for counter-current injection mixing of fluids, wherein a mixing head (1) is used, which is provided with at least two premixing chambers (2, 3), into which in each case the at least two mixing nozzles placed opposite each other (4,5 and 6,7, respectively) open, through which the fluids are injected under pressure into the premixing chamber (2, 3), and which are equipped in each case with an outlet (8, 9) leading into a remixing chamber (10), and with an outlet opening for the mixture from the remixing chamber (10),
**characterized in that**
the premixing chambers (2, 3) are so dimensioned and the mixing head (1) is so operated that the fluid mixtures obtained in the premixing chambers (2, 3) after the first injection as well as those exited through the outlets (8, 9) have at their disposal such a kinetic residual energy that they are thereby once again injected towards each other in the remixing chamber (10).

3. Method according to claim 2,
**characterized in that**
the outlets (8, 9) lie opposite in the premixing chambers (2, 3), and in particular lie opposite in the same axis.

4. Method according to claim 2 or 3,
**characterized in that**
the premixing chambers (2, 3) and/or the remixing chamber (10) is/are configured tubular or in particular hollow-cylindrical.

5. Method according to claim 4,
**characterized in that**
the premixing chamber/s (2, 3) and/or the remixing chamber (10) is/are equipped with a therein reciprocatingly movable plunger (11, 12, 13).

6. Method according to claim 4 or 5,
**characterized in that**
the outlets (8, 9) of the premixing chambers (2, 3) are so arranged that the fluid mixtures enter into the remixing chamber in an optional angle and in particular perpendicular to the longitudinal axis (14) thereof.

## Revendications

1. Procédé pour mélanger des fluides à injection contre-courant, par lequel au moins deux mélanges de fluides sont obtenus séparément en injectant au moins deux fois, en tout cas au moins deux fluides sous pression l'un contre l'autre dans une chambre de pré-mélange (2, 3), et qui sont de ce fait pré-mélangés en mélanges de fluides,
**caractérisé en ce que**
les fluides sont injectés pendant le pré-mélange de manière à ce que les mélanges de fluides ainsi obtenus soient ensuite à nouveau injectés grâce à l'énergie cinétique restante toujours présente après le pré-mélange, les uns contre les autres dans une chambre de mélange ultérieure (10) dans laquelle débouchent les chambres de pré-mélange (2, 3), et sont de ce fait mélangés à nouveau.

2. Procédé pour mélanger des fluides à injection contre-courant, utilisant une tête mélangeuse (1) qui est pourvue d'au moins deux chambres de pré-mélange (2, 3) dans lesquelles débouchent en tout cas au moins deux buses mélangeuses (4,5, respectivement 6,7) orientées l'une contre l'autre, à travers lesquelles les fluides sont injectés sous pression dans les chambres de pré-mélange (2, 3), et qui sont en tout cas équipées d'une orifice (8, 9) débouchant dans une chambre de mélange ultérieure (10), et d'une orifice de sortie pour le mélange de la chambre de mélange ultérieure (10),
**caractérisé en ce que**
les chambres de pré-mélange (2, 3) sont dimensionnées et la tête mélangeuse (1) est conduite de sorte que les mélanges de fluides obtenus dans les chambres de pré-mélange (2, 3) après la première injection et sortant par les orifices (8, 9), disposent d'une telle énergie cinétique restante qu'ils sont injectés de nouveau les uns contre les autres dans la chambre de mélange ultérieure (10).

3. Procédé selon la revendication 2,
**caractérisé en ce que**
les orifices (8, 9) des chambres de pré-mélange sont opposées les unes aux autres et sont opposées en particulier sur le même axe.

4. Procédé selon la revendication 2 ou 3,
**caractérisé en ce que**
les chambres de pré-mélange (2, 3) et/ou la chambre de mélange ultérieure (10) est/sont configurée/s en forme tubulaire et en particulier sous forme d'un cylindre creux.

5. Procédé selon la revendication 4,
**caractérisé en ce que**
la/les chambre/s de pré-mélange (2, 3) et/ou la chambre de mélange ultérieure (10) esVsont équipée/s d'un piston (11, 12, 13) movible en mouvement alternatif.

6. Procédé selon la revendication 4 ou 5,
**caractérisé en ce que**
les orifices (8, 9) des chambres de pré-mélange (2, 3) sont arrangées de sorte à ce que les mélanges de fluides entrent dans la chambre de mélange ultérieure (10) par un angle facultatif et en particulier perpendiculairement à l'axe longitudinale (14) de ladite chambre de mélange ultérieure (10).
